# EUROPEAN PATENT APPLICATION

(11) **EP 3 744 610 A1**
(43) Date of publication of application: **02.12.2020**
(21) Application number: 19177459.5
(22) Date of filing: 29.05.2019
(51) Int. Cl.: B62B 3/02, B62B 5/00

(54) **DEVICE FOR THE TRANSPORTATION OF GOODS AND PERSONS**

(71) Applicant: Monet-Lang, Paula, Brighton Vic 3186 (AU)
(72) Inventor: Monet-Lang, Paula, Brighton Vic 3186 (AU)
(74) Representative: Gerstein, Hans Joachim

(57) **Abstract**

A device for the transportation of goods and/or persons comprises a basket (3), a support infrastructure (5), and guide rails (13) are connected to or formed by the side ends of the basket, wherein the support infrastructure (5) comprises four movable legs (15), each leg (15) having a top end moveable connected with one of guide rails (13) of the side ends of the basket and a bottom end connected with a wheel (17), wherein in a moving position the legs (15) are attached in a vertical orientation to one of the guide rails (13), and wherein
in a storage position the legs (15) are attached in a horizontal orientation to the basket (3).

## Description

The present invention relates generally to a system for the transportation of goods and person, in particular to a shopping trolley.

In a conceivable scenario such as shopping in a supermarket or the like, a shopping trolley is always required. After paying at the checkout, the purchased items are usually packed in bags, then transported to the vehicle in the shopping trolley, then lifted out of the shopping trolley and placed in the trunk of a car. The shopping trolley must then be returned.

When unloading after arrival at home, the shopping bags usually have to be carried into the apartment or house by hand.

This is a time-consuming and sometimes exhausting process, especially if babies have to be transported while shopping and or for elderly people.

One object of the present disclosure is therefore based on the task of creating a freight wagon that can be used flexibly and that is suitable as a mobile wagon for transporting loads, for example as a shopping trolley, and that can also be loaded into a vehicle with support or unloaded from the vehicle when loaded.

This object is solved by a device for the transportation of goods and/or persons, comprising a basket and a support infrastructure, wherein
the basket has a front end, two opposite side ends and a back end opposite to the front end, wherein the two side ends are arranged at right angles to the front and the back end, and guide rails are connected to or formed by the side ends of the basket, wherein
the support infrastructure comprises four movable legs, each having a top end moveable connected with one of guide rails of the side ends of the basket and a bottom end connected with a wheel, wherein
in a moving position, the first leg is attached in a vertical orientation to the first guiding rail on the first side end of the basket at or adjacent to the front end of the basket, the second leg is attached in a vertical orientation to the second guiding rail on the second side end of the basket at or adjacent to the front end of the basket, the third leg is attached in a vertical orientation to the first guiding rail on the first side end of the basket at or adjacent to the back end of the basket, the fourth leg is attached in a vertical orientation to the second guiding rail on the second side end of the basket at or adjacent to the back end of the basket, and wherein
in a storage position the first, second, third and fourth leg are attached in a horizontal orientation to the basket, wherein the top ends of all four legs are located at or adjacent to the the front end of the basket.

The surprising finding of the present disclosure is that it is possible to provide a foldable device capable of carrying goods with the help of a basket and a support infrastructure.

The legs and wheels are arranged moveable next to the side walls of the basket in a way such that objects carried in the basket are not in contact with the legs and wheels and the wheels are in no state of the folding over the opening of the basket.

This is of importance as in case of using a device according to the present disclosure in the outside environment, the wheels and in case legs could get dirty, wet or the like and particles of dirt, leafs, water drops, or the like could fall of from the wheels and legs. According to the present disclosure, this is not of importance as the wheels and legs are always on the side and never over the top of the basket.

In accordance with the present disclosure "adjacent" to the front end or back end means that the legs and/or the guide rails ends at the end(s) of the basket or in a distance of up to 10% of the length of the basket away from the baskets ends, the length being measured between the front end and the back end.

The basket has a front end, two opposite side ends and a back end opposite to the front end. The two side ends are arranged at right angles to the front and the back end, and guide rails are connected to or formed by the side ends of the basket. It is obvious for those skilled in the art that the definition shall not exclude other forms of basket than a rectangular form. The typical basket has walls arranged on a base plate and for the present disclosure, the wheels should be arranged sliding in guide rails connect with or formed by the side ends of the basket. This means, that the side ends have to comprise vertical portions to the bottom of the basket to allow the sliding of the legs in the guide rails, but of course there is no need for a complete boxy design of the basket. It shall be understood that the definitions are meant in a function way and not in a design way to describe the functionality of the device according to the present disclosure.

Thereby, according to one example of the present disclosure, it may be preferred that the guiding rails extend from or beginning adjacent to the front end of the basket to the back end or ending adjacent to the back end of the basket, wherein the guide rails are preferably located at the top and at the bottom of the basket, and wherein in particular the guide rails run in a straight.

According to one example of the present disclosure it may be preferred that the guide rails extend from or beginning adjacent to the front end of the basket to the back end or ending adjacent to the back end. By arranging the same at the top and at the bottom of the basket, a good guidance of the legs can be provided. In this case, the legs are guided in two guide rails in parallel which avoids a twist of the legs and allows a smooth movement. Of course, instead of using two guide rails on each side of the basket, only one guide rail or more than two guide rails could be used.

The type of the guide rails is not limited and several guide rails known to the skilled person. The objective of the guide rail is to guide the movement of the legs relative to the basket by mechanical means.

It may thereby be preferred that the guide rails are formed by or attached to the upper end and/or the lower end of the basket.

According to a further example of the present disclosure, the basket comprises a floor element and two side elements and preferably a front end element and/or back end element, wherein the side elements, the front element and/or the back element are arranged in a vertical orientation to the floor element to form the basket, wherein the front element and/or the back element are build in form of a shutter.

According to one example of the present disclosure the basket has only side walls. It may as well be preferred that at least the front end is closed by a sort of wall, wherein the back end is open or closed by an element as well.

On the back end side usually a handlebar to ease the pushing and pulling of the device is arranged. On the opposite front it is preferred that the same is close to avoid transported goods to fall out of the basket.

Anyhow, there are several use cases where it is of advantage when the front end would be open as well, e.g. if a beer box should be lifted into the basket. In this case a shutter could be of help to allow a level loading zone while the shutter is afterwards closed.

According to a further example, at least one of the wheels connected to the legs comprises a break, preferable the two wheels of the front legs comprises a break.

Such a break has many advantages. One advantage is that on uneven ground the device can be kept in on a desired position. As well, if both of the front legs, the first leg and the third leg, comprises a braked wheel, the movement of the legs related to the basket could be controlled.

If the first and the second leg wheels are braked, the basket can be moved relative to the legs that are gliding in the guide rails while the basket is carried as well by the second and the fourth leg which still have free moveable wheels.

For the folding mechanism it may be preferred according to one embodiment that the first leg and the third leg and the second leg and the fourth leg lie against each other and form a unit and rotate together from the vertical moving position into the horizontal storage position.

Thereby, it may be of advantage that the unit of the first and third leg and the unit of the second and fourth leg is formed at the back end of the basket.

It may as well be of advantage that one part of the upper end portion of the first leg and one part of the upper end portion of the third leg form a semicircle each, wherein when the first and third leg are pushed together in the guide rail, the upper portions of the first and the third leg form a circle comprising a circular guide rail, and wherein
one part of the upper end portion of the second leg and one part of the upper end portion of the fourth leg form a semicircle each, wherein when the second and fourth leg are pushed together in the guide rail, the upper portions of the second and the fourth leg form a circle comprising a circular guide rail, and wherein the joined semicircles of the first and the third leg and of the second and the fourth leg snapped on reciprocal supports comprised by the semicircles.

In addition, it may be preferred that the upper portion of the four legs are connected to the guide rails while the first and the third leg and the second and the fourth leg are rotatable within the circular guide rails from a vertical to a horizontal position relative to the basket.

Thereby, it could be of advantage that the first and the third leg and the second and the fourth leg are aligned offset to each other so that the can be arranged partly in parallel to each other.

As well, according to one embodiment, it may be preferred that the wheels of the legs are capable of a 360° movement.

Moreover, it may be of advantage that the side walls of the basket comprises fastening means to attach a connection band between the side walls, wherein at least one further device can be fixed to the connection band.

Thereby, according to one example, it may be preferred that he at least one further device comprises a children seat, wherein in particular the children seat is foldable.

As well it can be preferred that the four legs are connected with each other, preferably next to their bottom, by a scissor-element connecting cross-over the front-left leg and the back-right leg and the front right leg and the left back leg and having a pivot between the legs.

The problem to be solved by this scissor element having a pivot between the legs and the wheels is to absorb mechanical forces, in particular torques, that exist if the legs are only fixed on the basket.

The second problem solve is that if one leg is moved, all other legs move as well in the rails. This means for example by unfolding the device, even if one leg has no contact with the ground, the movement of the other legs will move this leg as well. So the security of the overall device is much higher.

Finally, it can be according to one example of advantage that the second and the fourth leg comprises a grip aid in form of a handled formed by or attached to each of the second and fourth leg.

The foregoing aspects and many of the attendant advantages of this invention will become more readily appreciated as the same become better understood by reference to the following detailed description, when taken in conjunction with the accompanying drawing, wherein:
FIG. 1 is a schematic side view of an example of a device according to the present disclosure in the moving position;
FIG. 2 is a schematic front view of an example of a device according to the present disclosure in the moving position;
FIG. 3 is a perspective view of one example of a device according to the present disclosure in the moving position;
Fig. 4a to 4g: shows a perspective view of one example of a device according to the present disclosure in the storage position stored in the trunk of a car, the removal of the device from the trunk and the motion of the transfer of the storage position to the movement position;

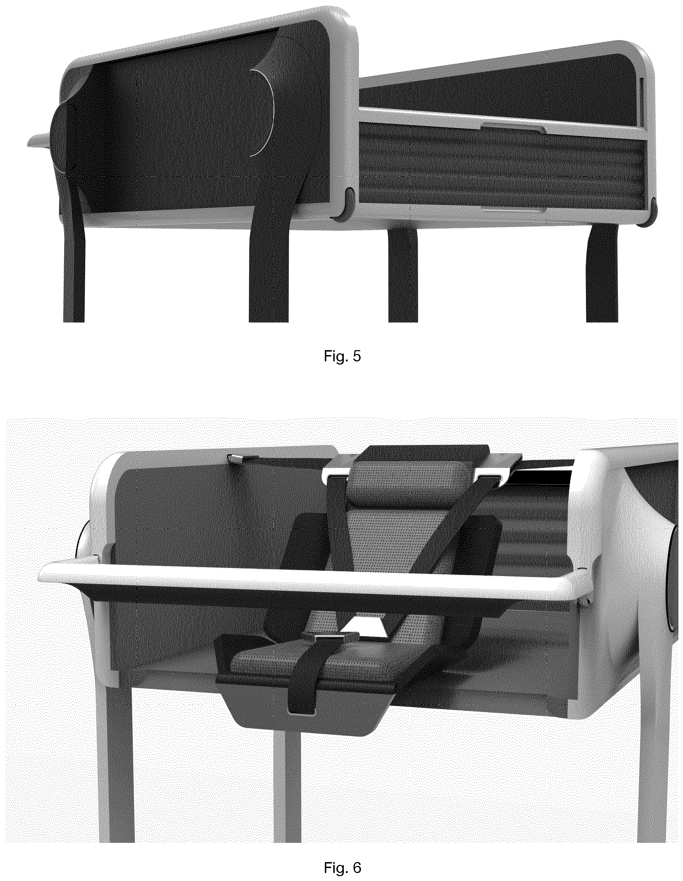

Fig. 5: is a perspective view of one example of a device according to the present disclosure in the moving position with a half-opened shutter at the fronts side of the basket;
Fig. 6: is a perspective view of one example of a device according to the present disclosure in the moving position comprising a foldable child seat connected to a connection band attached to the side walls;

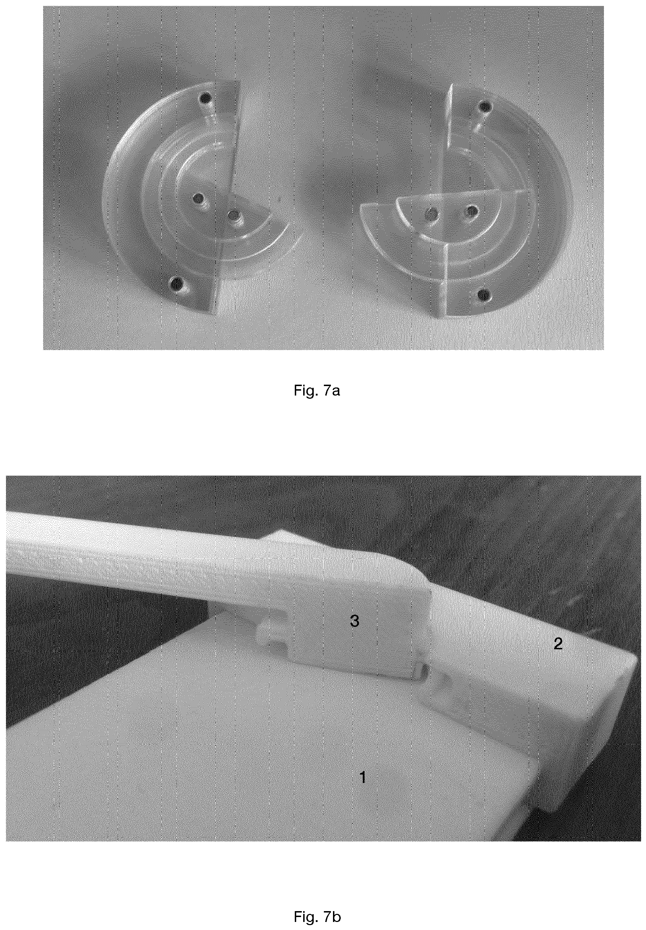

Fig. 7a and 7b: show an example of semicirculars comprised by the legs for the rotational movement.

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

While illustrative examples are illustrated and described below, it will be appreciated that various changes can be made therein without departing from the spirit and scope of the disclosure. In that regard, the detailed description set forth below, in connection with the appended drawings is intended only as a description of various examples of the disclosed subject matter and is not intended to represent the only examples. Each example described in this disclosure is provided merely as an example or illustration and should not be construed as preferred or advantageous over other examples. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

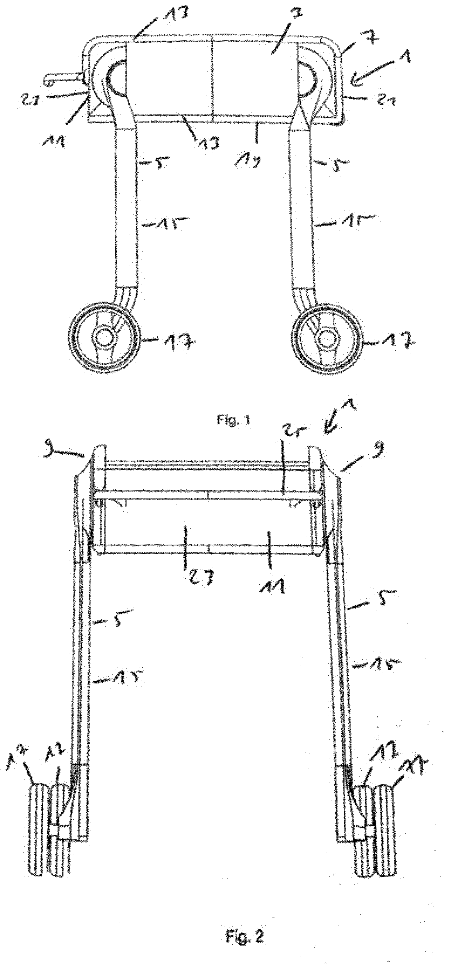

Figure 1 shows an example of a device (1) for the transportation of goods and/or persons according to the present disclosure comprising a basket (3) and a support infrastructure (5), wherein the basket has a front end (7), two opposite side ends (9) and a back end (11) opposite to the front end, wherein the two side ends (9) are arranged at right angles to the front and the back end (7, 11), and guide rails (13) are connected to or formed by the side ends of the basket (3), wherein the support infrastructure (5) comprises four movable legs (15), each having a top end moveable connected with one of guide rails (13) of the side ends (9) of the basket (3) and a bottom end connected with a wheel (17).

In a moving position as seen in Figs. 1, 2 and 4f, 4e, the first leg (15) is attached in a vertical orientation to the first guiding rail (13) on the first side end (9) of the basket (3) at the front (7) end of the basket (3), the second leg (15) is attached in a vertical orientation to the second guiding rail (13) on the second side end (9) of the basket at the front end (7) of the basket (3).

The third leg (15) is attached in a vertical orientation to the first guiding rail (13) on the first side end (9) of the basket (3) at the back end (11) of the basket (3) and the fourth leg (15) is attached in a vertical orientation to the second guiding rail (13) on the second side end (9) of the basket (3) at the back end (11) of the basket (3

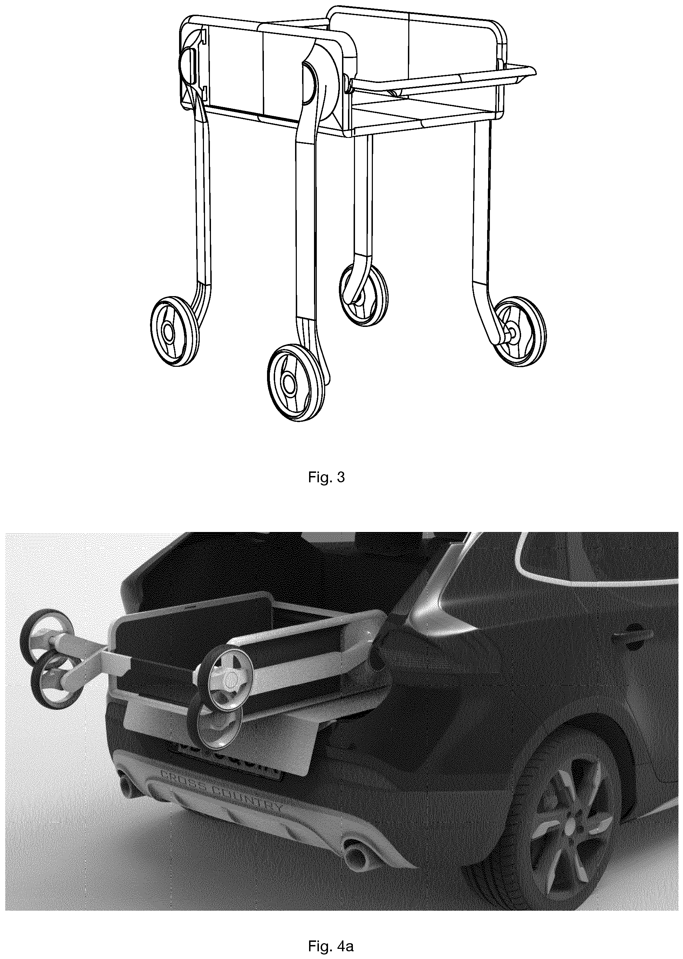

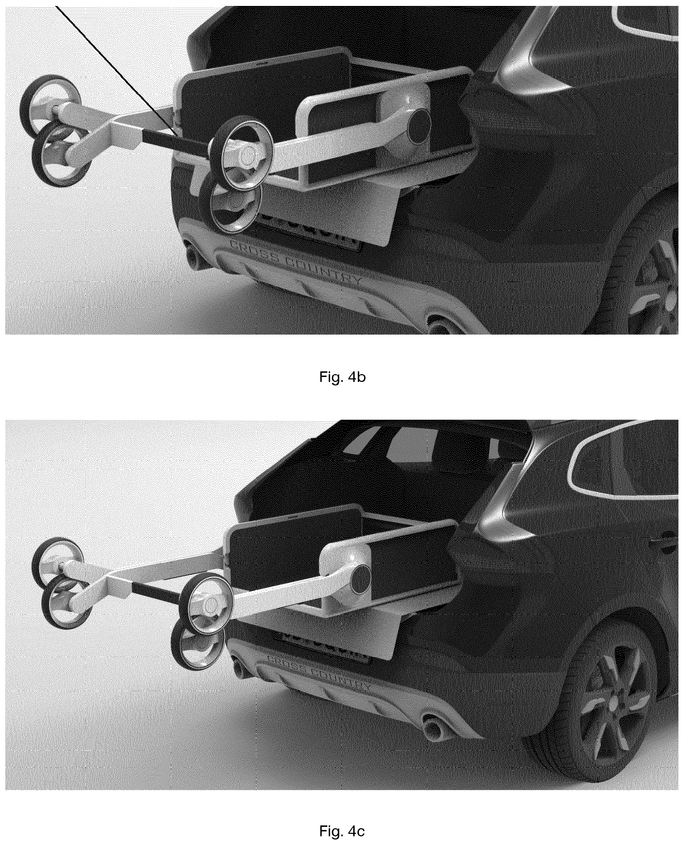

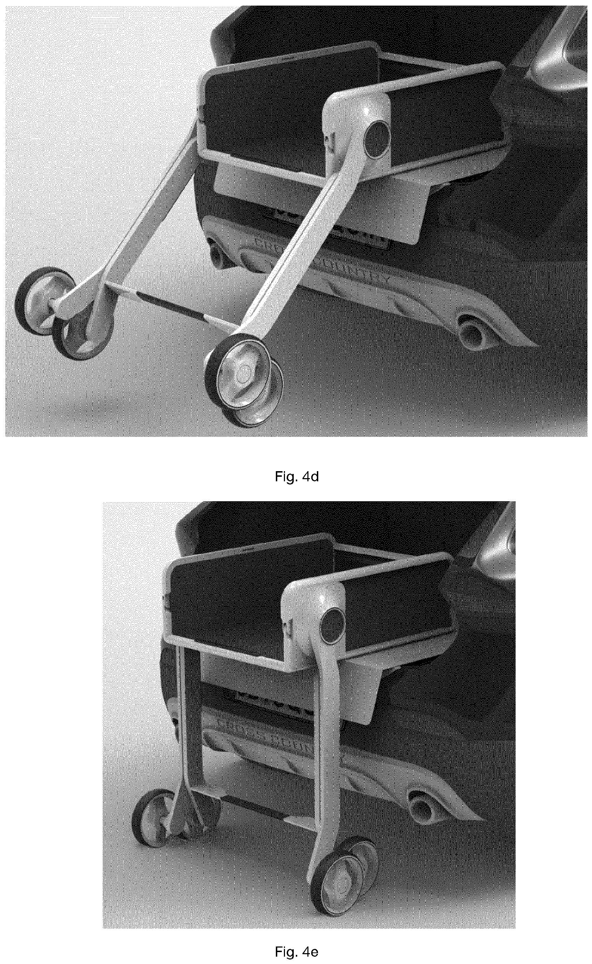

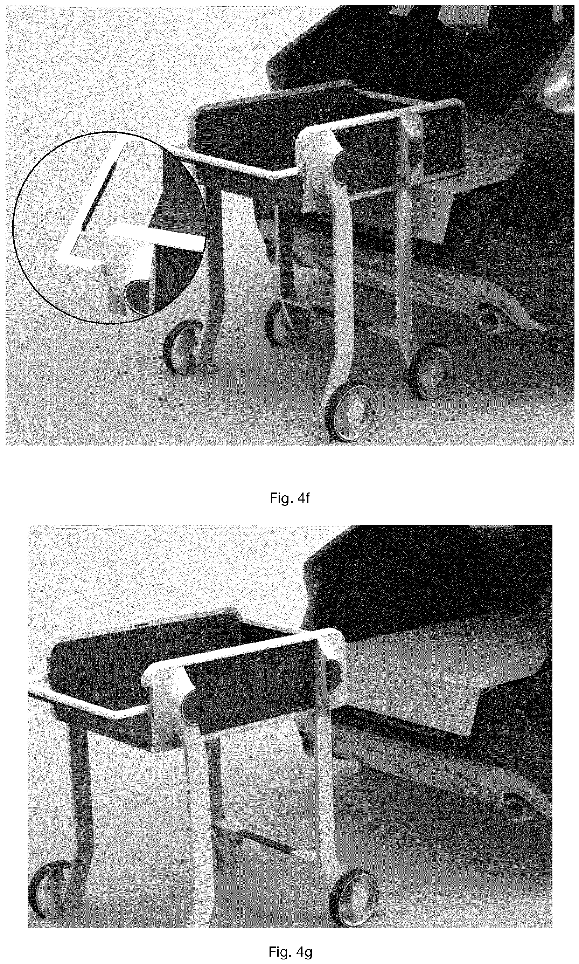

In a storage position as shown in the fig. 4a to 4c the first, second, third and fourth legs (15) are attached in a horizontal orientation to the basket (3), wherein the top ends of all four legs (15) are located at the the front end (7) of the basket (3).

The guide rails (13) extend from the front end (7) of the basket to the back end (11). By arranging the same at the top and at the bottom of the basket (3) as shown, a good guidance of the legs can be provided. In this case, the legs (15) are guided in two guide rails (13) in parallel which avoids a twist of the legs (15) and allows a smooth movement.

The basket (3) comprises a floor element (19) and two side elements and a front end element (21) and back end element (23), wherein the side elements, the front element (21) and the back element (23) are arranged in a vertical orientation to the floor element (19) to form the basket (3), wherein the front element (21) is build in form of a shutter.

On the back end side (11) a handlebar (25) to ease the pushing and pulling of the device is arranged. On the opposite front it is preferred that the same is close to avoid transported goods to fall out of the basket (3).

The given examples of cleaning workers are provided to ease the understanding of the disclosure of the present application only. It is obvious for those skilled in the art that other tasks might be assigned as well to different users.

## Claims

1. Device for the transportation of goods and/or persons, comprising a basket and a support infrastructure, wherein
the basket has a front end, two opposite side ends and a back end opposite to the front end, wherein the two side ends are arranged at right angles to the front and the back end, and guide rails are connected to or formed by the side ends of the basket, wherein
the support infrastructure comprises four movable legs, each having a top end moveable connected with one of the guide rails of the side ends of the basket and a bottom end connected with a wheel, wherein
in a moving position, the first leg is attached in a vertical orientation to the first guiding rail on the first side end of the basket at or adjacent to the front end of the basket, the second leg is attached in a vertical orientation to the second guiding rail on the second side end of the basket at or adjacent to the front end of the basket, the third leg is attached in a vertical orientation to the first guiding rail on the first side end of the basket at or adjacent to the back end of the basket, the fourth leg is attached in a vertical orientation to the second guiding rail on the second side end of the basket at or adjacent to the back end of the basket, and wherein
in a storage position the first, second, third and fourth leg are attached in a horizontal orientation to the basket, wherein the top ends of all four legs are located at or adjacent to the the front end of the basket.

2. Device according to claim 1, wherein
the guiding rails extend from or beginning adjacent to the front end of the basket to the back end or ending adjacent to the back end of the basket, wherein the guide rails are preferably located at the top and at the bottom of the basket, and wherein in particular the guide rails run in a straight.

3. Device according to claim 2, wherein
the guide rails are formed by or attached to the upper end and/or the lower end of the basket.

4. Device according to any of the preceding claims, wherein
the basket comprises a floor element and two side elements and preferably a front end element and/or back end element, wherein the side elements, the front element and/or the back element are arranged in a vertical orientation to the floor element to form the basket, wherein the front element and/or the back element are build in form of a shutter.

5. Device according to any of the preceding claims, wherein
at least one of the wheels connected to the legs comprises a break, preferable the two wheels of the front legs comprises a break.

6. Device according to any of the preceding claims, wherein
the first leg and the third leg and the second leg and the fourth leg lie against each other and form a unit and rotate together from the vertical moving position into the horizontal storage position.

7. Device according to claim 6, wherein
the unit of the first and third leg and the unit of the second and fourth leg is formed at the back end of the basket.

8. Device according to claim 6 or 7, wherein one part of the upper end portion of the first leg and one part of the upper end portion of the third leg form a semicircle each, wherein when the first and third leg are pushed together in the guide rail, the upper portions of the first and the third leg form a circle comprising a circular guide rail, and wherein
one part of the upper end portion of the second leg and one part of the upper end portion of the fourth leg form a semicircle each, wherein when the second and fourth leg are pushed together in the guide rail, the upper portions of the second and the fourth leg form a circle comprising a circular guide rail, and wherein

9. Device according to claim 8, wherein
the joined semicircles of the first and the third leg and of the second and the fourth leg snapped on reciprocal supports comprised by the semicircles.

10. Device according to claim 8 or claim 9, wherein
the upper portion of the four legs are connected to the guide rails while the first and the third leg and the second and the fourth leg are rotatable within the circular guide rails from a vertical to a horizontal position relative to the basket.

11. Device according to any of the claims 6 to 10, wherein
the first and the third leg and the second and the fourth leg are aligned offset to each other so that the can be arranged partly in parallel to each other.

12. Device according to any of the preceding claims, wherein
the wheels of the legs are capable of a 360° movement.

13. Device according to any of the preceding claims, wherein
the side walls of the basket comprises fastening means to attach a connection band between the side walls, wherein at least one further device can be fixed to the connection band, and wherein the at least one further device comprises a children seat, wherein in particular the children seat is foldable..

14. Device according to any of the preceding claims, wherein
the four legs are connected with each other, preferably next to their bottom, by a scissor-element connecting cross-over the front-left leg and the back-right leg and the front right leg and the left back leg and having a pivot between the legs.

15. Device according to any of the preceding claims, wherein
the second and the fourth leg comprises a grip aid in form of a handled formed by or attached to each of the second and fourth leg.
